# EUROPÄISCHE PATENTSCHRIFT

(11) **EP 1 303 368 B1**
(45) Veröffentlichungstag und Bekanntmachung des Hinweises auf die Patenterteilung: **26.10.2005**
(21) Anmeldenummer: 01940208.0
(22) Anmeldetag: 03.05.2001
(51) Int. Cl.: B21K 1/12, B21H 5/00

(54) **VERFAHREN ZUM HERSTELLEN EINER WELLE SOWIE VORRICHTUNG BEINHALTEND EINE SOLCHE WELLE**
METHOD FOR PRODUCING A SHAFT AND DEVICE CONTAINING ONE SUCH SHAFT
PROCEDE POUR PRODUIRE UN ARBRE ET DISPOSITIF EQUIPE D'UN TEL ARBRE

(30) Priorität: 14.07.2000 DE 10034410
(43) Veröffentlichungstag der Anmeldung: 23.04.2003
(73) Patentinhaber: ROBERT BOSCH GMBH, 70442 Stuttgart (DE)
(72) Erfinder: FAUTH, Lothar, 77815 Buehl (DE)
(86) Internationale Anmeldenummer: PCT/DE2001/001684
(87) Internationale Veröffentlichungsnummer: WO 2002/005985

(56) Entgegenhaltungen:
- FR-A- 2 714 856
- GB-A- 1 137 035
- US-A- 5 408 897
- PATENT ABSTRACTS OF JAPAN vol. 017, no. 271 (M-1417), 26. Mai 1993 (1993-05-26) -& JP 05 007970 A (TOSHIBA CORP), 19. Januar 1993 (1993-01-19)
- PATENT ABSTRACTS OF JAPAN vol. 008, no. 073 (M-287), 5. April 1984 (1984-04-05) -& JP 58 218337 A (MITSUBA DENKI SEISAKUSHO:KK), 19. Dezember 1983 (1983-12-19)

## Beschreibung

### Stand der Technik

Die Erfindung betrifft ein Verfahren zum Herstellen einer Welle sowie eine Vorrichtung beinhaltend eine solche Welle nach der Gattung der unabhängigen Ansprüche, (siehe z.B. US-A-5 408 897).

Mit dem deutschen Gebrauchsmuster GM 297 02 525.2 ist eine Vorrichtung bekannt geworden, die beispielsweise zum Verschieben von Fensterscheiben, Schiebedächern oder Sitzen eingesetzt wird. Die Aufgabe dieser Lehre besteht darin, ein unerwünschtes Längsspiel einer Ankerwelle mittels eines stirnseitig angebrachten Dämmgummis zu vermeiden. Auf die Ankerwelle ist eine Schnecke aufgepresst, die das Drehmoment des Elektromotors auf das Schneckenrad überträgt. Das vordere Ende der Ankerwelle wird dabei in einer Drehlageraufnahmebuchse geführt. Dadurch wird verhindert, dass die Schnecke radial ausweicht und dadurch der Verzahnungseingriff Schnecke - Rad gestört wird oder Zähne zerstört werden. Dies ist besonders wichtig, wenn zwischen der Schnecke und dem Schneckenrad starke radiale Kräfte auftreten, insbesondere dann, wenn das Stellteil gegen einen Anschlag fährt. Fertigungstechnisch ist das Aufpressen der gefertigten Schnecke auf die Ankerwelle ein sehr aufwendiger Prozess. Weit kostengünstiger hingegen ist das direkte Aufrollen der Schnecke auf die Ankerwelle. Dabei entsteht prozessbedingt ein ausgedehnter Auslaufbereich der Schnecke, der weder für die Kraftübertragung auf das Schneckenrad, noch zur Lagerung der Ankerwelle genutzt werden kann. Dies führt dazu, dass vor allem bei Anwendungen, bei denen wenig Bauraum zur Verfügung steht, das Ende der Ankerwelle nicht mehr abgestützt werden kann, bzw. aufwendige Fertigungsprozesse notwendig sind, um eine solche Lagerung zu realisieren.

### Vorteile der Erfindung

Das erfindungsgemäße Verfahren mit den Merkmalen des Anspruchs 1 hat den Vorteil, dass unabhängig vom Herstellungsprozess der Schnecke auf sehr einfache Weise eine Lageroberfläche zur Lagerung der Ankerwelle geschaffen werden kann. Durch Kaltumformung und Verzicht auf spanende Bearbeitung kann eine Lagerstelle kostengünstig hergestellt werden. Die Übergangszone von der ausgeformten Schnecke zum Lager kann sehr kurz gehalten, der Verzahnungseingriff nahe an die Lagerstelle geführt werden. Dies ermöglicht einen sicheren Verstellbetrieb, bei dem eine Schädigung der Verzahnung effektiv vermieden wird.

Durch die in den Unteransprüchen aufgeführten Merkmale sind vorteilhafte Weiterbildungen des Verfahrens nach Anspruch 1 möglich. Herstellungstechnisch ist es von besonderem Interesse zuerst eine Schnecke über einen gewissen Wellenbereich, beispielsweise mittels eines Rollierverfahren, anzuformen. Verfahrensbedingt entstehen dabei relativ ausgedehnte Auslaufbereiche an den Enden der Schnecke, die weder für eine kraftübertragende Verzahnung noch als Lagerfläche genutzt werden können. Hier ist es besonders vorteilhaft, diese Auslaufbereiche der Welle mittels Materialverdrängung zu einer Lageroberfläche umzuformen. Vor allem unter der Vorgabe Bauraum einzusparen ist es ein gewichtiges Kriterium, die Lageroberfläche in unmittelbarer Nähe zum effektiven Zahneingriff der Schnekcke zu realisieren. Mittels Materialverdrängung können auch Abschnitte im mittleren Bereich der Schnecke sehr einfach zu einer Lageroberfläche umgeformt werden, ohne dass dabei ausgedehnte Übergangsbereiche zwischen Lageroberfläche und Schnecke erzeugt werden.

Wird die Schnecke und die Lageroberfläche mittels Materialverdrängung auf der selben Arbeitsmaschine angeformt, muss die Welle für diesen Vorgang nur einmal eingespannt werden. Ein kompletter Arbeitsschritt wird gespart, was eine schnelle und kostengünstige Produktion ermöglicht.

Als besonders günstig erweist sich eine Materialumformung mittels Rollen. Hierzu können sehr einfach zu fertigende Glattwalzwerkzeuge verwendet werden. Die gewünschte Breite der Lageroberfläche wird durch die Breite des Glattwalzwerkzeugs vorgegeben. Dadurch ist eine radiale Bewegung der Rollierwalze zur Ankerwelle hin ausreichend. Dies stellt einen äußerst einfach handhabbaren Prozessschritt dar.

Durch die Materialverdrängung ist nicht nur eine Durchmesserverringerung wie beim spanenden Verfahren möglich, sondern auch ein Auffüllen von Materiallücken. Dies ermöglicht die Herstellung eines größereren Lagerdurchmesser, vorzugsweise von etwa dem gleichen Durchmesser, wie der der ursprünglichen Welle. Somit werden Schwachstellen der Ankerwelle durch geringere Lagerdurchmesser vermieden. Außerdem ist die Oberflächenqualität solch einer durch Kaltverformung hergestellten Lageroberfläche größer.

Besonders vorteilhaft ist das Anformen der Lageroberfläche am Ende der Welle. Hier tritt die größtmöglichste Auslenkung der Ankerwelle auf, die durch die Kraftübertragung der Verzahnung erzeugt wird. Wird die Welle an ihrem Ende mittels eines Lagers sicher geführt, ist ein ausreichender Zahneingriff gewährleistet. Damit die Welle nicht unnötig lang sein muss, ist es bei dieser Anordnung von besonderem Vorteil, dass mittels Materialverdrängung ein sehr scharfer Übergang von der Lageroberfläche zum effektiven Zahneingriff geschaffen wird.

Von Vorteil ist es auch, wenn die Lageroberfläche mindestens so breit angeformt wird, wie es der Ganghöhe einer umlaufenden Gewindebahn der Schnecke entspricht. Da das Material im Bereich der Schneckenzähne stärker verdichtet ist als im Bereich der Zahnlücken, sind die Bereiche der ehemaligen Schneckenzähne härter und somit belastbarer. Entspricht die Länge einer Lagerstelle mindestens der Teilung einer Verzahnung, so ist über den Umfang der Lagerstelle eine spiralförmig verlaufende hohe Oberflächenqualität gewährleistet.

Die erfindungsgemäße Vorrichtung mit den Merkmalen des unabhängigen Anspruchs 8 hat den Vorteil, dass eine hochwertige Lageroberfläche mit einem sehr kurze Übergangszone zum kraftübertragenden Schneckenbereich geschaffen ist.

Ist die Lageroberfläche am Ende der Welle als Stützzapfen ausgebildet, kann dieser sehr wirkungsvoll in einer Drehlageraufnahmebuchse geführt werden. Dadurch wird verhindert, dass sich die Schnecke radial ausweicht. Dies ermöglicht einen sicheren Verstellbetrieb.

### Zeichnung

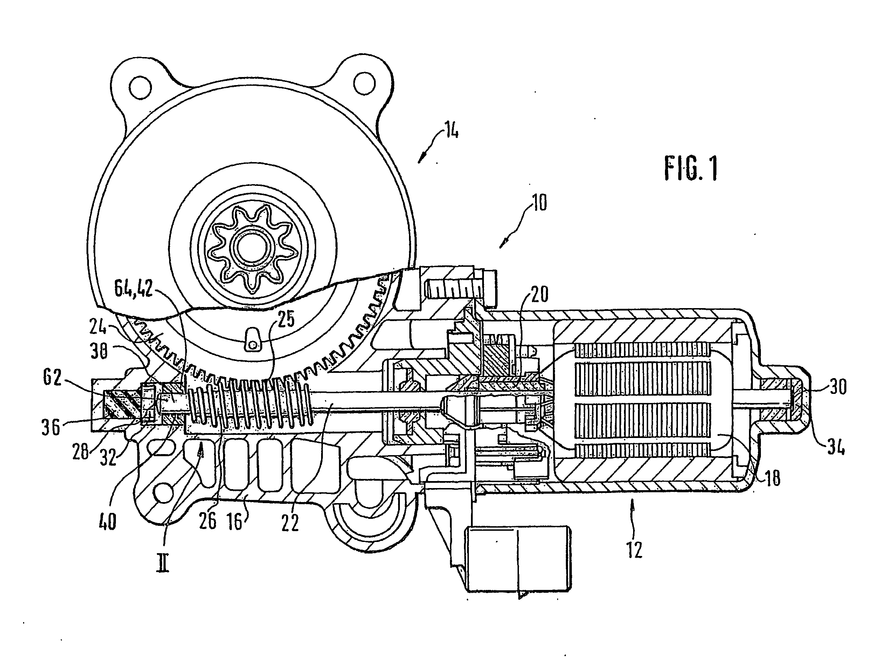

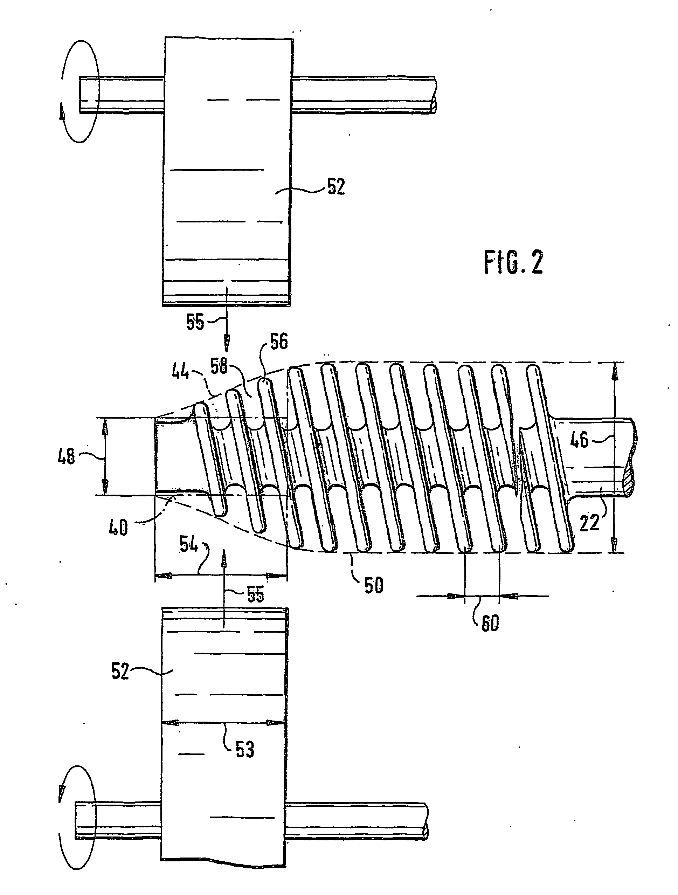

In der Zeichnung ist ein Ausführungsbeispiel einer erfindungsgemäßen Vorrichtung dargestellt und in der nachfolgenden Beschreibung näher erläutert. Es zeigen Figur 1 eine Vorrichtung im Schnitt, Figur 2 einen vergrößerten Ausschnitt der Welle nach II in Figur 1

### Beschreibung

In Figur 1 ist ein Verstellantrieb 10 dargestellt, mit einem Motor 12 und einem ein Getriebe 14 umgebenen mehrteiligen Gehäuse 16. Der Motor 12 ist elektrisch kommmutiert und weist einen Anker 18, einen Kommuntator 20 und eine mehrfach gelagerte Ankerwelle 22 auf, die sich bis in den Bereich des Getriebes 14 erstreckt. Auf der Ankerwelle 22 ist eine Schnecke 26 aufgebracht, die mit einem Schneckenrad 24 über eine Verzahnung 25 kommuniziert. An den Stirnseiten 28 und 30 der Ankerwelle 22 ist diese in Längsrichtung über Anlaufsschreiben 32 und 34, sowie über ein Dämpfungsgummi 36 am Gehäuse 16 bzw. einem Teil des Gehäuses 16 abgestützt. An einem Ende 38 der Ankerwelle 22 ist mittels Materialverdrängung eine Lageroberfläche 40 angeformt. Diese Lageroberfläche 40 wird in einer Wellenlagerung 42 geführt, um ein Ausweichen der Ankerwelle 22 aus der Verzahnung 25 zu verhindern.

Figur 2 zeigt anhand einer Vergrößerung des Endes 38 der Ankerwelle 22 schematisch den Herstellungsprozess der Lageroberfläche 40. Auf die Ankerwelle 22 wird zuerst die Schnecke 26 aufrolliert. Herstellungsbedingt entsteht am Ende der Schnecke 26 ein Auslaufbereich, in dessen Verlauf der Außendurchmesser 46 der Schnecke im Bereich der kraftübertragenden Verzahnung 25 auf den ursprünglichen Durchmesser 48 der Ankerwelle 22 an deren Ende abnimmt. Dies wird in Figur 2 durch eine Einhüllkurve 50 (gestrichelte Kurve) verdeutlicht. In diesem Auslaufbereich 44 wird nun mittels Rollen eine Lageroberfläche 40 angeformt. Dazu werden zwei rotierende Glattwalzwerkzeuge 52 radial auf die Ankerwelle 22 zubewegt. Die Glattwalzwerkzeuge 52 bestehen im einfachsten Fall aus kreisrunden Scheiben einer bestimmten Dicke 53, die der Breite 54 der angeformten Lageroberfläche 40 entspricht. Beim radialen Vorschub (in Figur 2 durch Pfeile 55 dargestellt) der Glattwalzwerkzeuge 52 werden Schneckenzähne 56 in Zahnlücken 58 gedrückt, bis eine glatte Lageroberfläche entsteht, deren Durchmesser 48 in etwa dem der ursprünglichen Welle 22 entspricht. Das Wellenprofil nach dem Anformen der Lageroberfläche 40 ist in Figur 2 als Strichpunktlinie 57 dargestellt. Der Vorschub der Rollierwerkzeuge 52 kann jedoch auch schon früher beendet werden, so dass die Schneckezähne 56 nur partiell verformt werden. Dabei entsteht keine glatte Lageroberfläche 40. Ist die Breite 54 der Lageroberfläche 40 jedoch größer als die Ganghöhe 60 eines umlaufenden Gewindegangs der Schnecke 26, ist trotzdem eine radialsymmetrische Ausformung der Lageroberfläche 40 gewährleistet.

Alternativ können Glattwalzwerkzeuge 52 verwendet werden, die nicht kreisrund sind. Ist die Rollierscheibe exentrisch gelagert oder spiralförmig ausgebildet, so kann auf deren Vorschub radial zur Ankerwelle 26 verzichtet werden. Es ist auch möglich, schmälere Glattlaugwerkzeuge 52 einzusetzen und die gewünschte Breite54 über einen axialen Vorschub zu erreichen. Unabhängig von der speziellen Ausführung der Rollierwerkzeuge kann die Rollierung der Schnecke 26 und der Lageroberfläche 40 in der selben Einspannposition der Ankerwelle 22 erfolgen.

In einer weiteren Variation des Ausführungsbeispiels wird die Schnecke 26 durch ein anderes Verfahren als das Rollen angeformt. Dies kann beispielsweise ein spanendes Verfahren sein oder die Schnecke kann als separates Bauteil auf die Welle aufgepresst werden. Unabhängig von der Herstellungsweise der Schnecke 26 kann auch bei dieser Ausführung an jeder beliebigen Stelle der Ankerwelle 22 mittels Materialverdrängung auf einfache Weise eine Lageroberfläche 40 angeformt werden, solange es die Materialeigenschaften des Werkstoffes zulassen.

In Figur 1 ist die Lageroberfläche 40 am Ende 38 der Ankerwelle 22 mittels Materialverdrängung angeformt. Dabei bildet die Lageroberfläche 40 einen Stützzapfen 62, der in sehr einfacher Weise von einer Drehlageraufnahmebuchse 64 geführt wird. Dieses Gleitlager ist sehr kostengünstig herzustellen und einfach zu montieren. In einer alternativen Ausführungsform ist die Lageroberfläche 40 im Bereich der Schnecke 26 zwischen der Verzahnung 25 und dem Kommutator 20 angeformt. Hierbei ist die Lagerung aufwendiger in der Herstellung. Zusätzlich kann das Ende 38 der Ankerwelle 22 beispielsweise auch nur einseitig abgestützt werden, um ein Ausweichen der Ankerwelle 22 an ihrem Ende 38 zu verhindern. Hierzu ist am Ende 38 der Ankerwelle 22 ebenfalls eine Lageroberfläche angeformt.

## Patentansprüche

1. Verfahren zum Herstellen einer Welle (22), insbesondere einer Ankerwelle (22) eines elektromotorischen Antriebs (10), die mindestens durch eine Wellenlagerung (42) gehalten wird, und die Welle (22) mindestens an einer Stelle mittels Materialverdrängung eine Lageroberfläche (40) angeformt wird, **dadurch gekennzeichnet, dass** zuerst eine Schnecke (26) auf die Welle (22) geformt und danach mindestens eine Lageroberfläche (40) zur Führung in einer Wellenlagerung (42) im Bereich der Schnecke (26) mittels Materialverdrängung angeformt wird.

2. Verfahren nach Anspruch 1, **dadurch gekennzeichnet, dass** die Materialverdrängung mittels Rollen mit Glattwalzwerkzeugen (52) ausgeführt wird.

3. Verfahren nach Anspruch 1 oder 2, **dadurch gekennzeichnet, dass** das Formen der Schnecke (26) und das Anformen der Lageroberfläche (40) mittels Materialverdrängung auf derselben Arbeitsmaschine erfolgt.

4. Verfahren nach einem der Ansprüche 1 bis 3, **dadurch gekennzeichnet, dass** das Anformen der Lageroberfläche (40) mittels Rollen der Welle (22) ausgeführt wird.

5. Verfahren nach einem der Ansprüche 1 bis 4, **dadurch gekennzeichnet, dass** bei der Materialverdrängung die Schneckenzähne (56) zumindest partiell kaltverformt werden und der Zahnwerkstoff in die Zahnlücken (58) gedrückt wird.

6. Verfahren nach Anspruch 1 bis 5, **dadurch gekennzeichnet, dass** das Anformen der Lageroberfläche (40) am Ende (38) der Welle (22) erfolgt.

7. Verfahren nach einem der Ansprüche 1 bis 6, **dadurch gekennzeichnet, dass** die Breite (54) der Lageroberfläche (40) mindestens einer Ganghöhe (60) der Schnecke (26) entspricht.

8. Vorrichtung zum Verstellen von zu einem Kraftfahrzeug gehörenden Bauteilen mit einem eine Ankerwelle (22) aufweisenden elektrischen Antriebsmotor (12) und einem diesem nachgeordneten Getriebe (14), insbesondere Schneckengetriebe (14), das mit dem Antriebsmotor (12) über die Ankerwelle (22) wirkverbunden ist, wobei die Ankerwelle (22) nach einem der vorhergehenden Verfahrensansprüchen hergestellt ist, **dadurch gekennzeichnet, dass** an die Ankerwelle (22) mindestens an einer Stelle mittels Materialverdrängung durch Kaltumformung eine Lageroberfläche (40) zur Führung in einer Wellenlagerung (42) im Bereich einer zuvor angeformten Schnecke (26) angeformt ist.

9. Vorrichtung nach Anspruch 8, **dadurch gekennzeichnet, dass** die Lageroberfläche (40) unmittelbar am Ende (38) der Welle (22) liegt.

10. Vorrichtung nach einem der Ansprüche 9 oder 10, **dadurch gekennzeichnet, dass** die Lageroberfläche (40) einen Stützzapfen (62) bildet, der in einer DrehlagerAufnahmebuchse (64) geführt wird.

## Claims

1. Method for producing a shaft (22), in particular an armature shaft (22) of an electromotive drive (10), which shaft is held by at least one shaft bearing (42), and the shaft (22) is formed onto a bearing surface (40) at at least one point by means of positive displacement of material, **characterized in that** first a worm (26) is formed onto the shaft (22), and after that, at least one bearing surface (40) for guidance in a shaft bearing (42) is formed on in the region of the worm (26) by means of positive displacement of material.

2. Method according to Claim 1, **characterized in that** the positive displacement of material is performed by means of rolling with smooth-rolling tools (52).

3. Method according to Claim 1 or 2, **characterized in that** the forming of the worm (26) and the forming on of the bearing surface (40) take place on the same machine tool by means of positive displacement of material.

4. Method according to one of Claims 1-3, **characterized in that** the forming on of the bearing surface (40) is performed by means of rolling of the shaft (22).

5. Method according to one of Claims 1-4, **characterized in that** in the positive displacement of material, the worm teeth (56) are at least partially cold-formed, and the tooth material is forced into the tooth gaps (58).

6. Method according to Claims 1-5, **characterized in that** the forming on of the bearing surface (40) takes place at the end (38) of the shaft (22).

7. Method according to one of Claims 1-6, **characterized in that** the width (54) of the bearing surface (40) is equivalent to at least one pitch height (60) of the worm (26).

8. Device for adjusting components, belonging to a motor vehicle, having an electric drive motor (12) that has an armature shaft (22) and having a gear (14), in particular a worm gear (14), downstream of the electric drive motor, which gear is operatively connected to the drive motor (12) via the armature shaft (22), and the armature shaft (22) is produced by one of the foregoing method claims, **characterized in that** a bearing surface (40) for guidance in a shaft bearing (42) is formed by cold forming onto the armature shaft (22) in the region of a previously formed-on worm (26) at at least one point by means of positive displacement of material.

9. Device according to Claim 8, **characterized in that** the bearing surface (40) lies directly at the end (38) of the shaft (22).

10. Device according to either of Claims 9 and 10, **characterized in that** the bearing surface (40) forms a support journal (62), which is guided in a rotary bearing receiving bush (64).

## Revendications

1. Procédé pour fabriquer un arbre (22), en particulier un arbre d'induit (22) d'un entraînement à moteur électrique (10), dont l'arbre tenu au moins par un palier d'arbre (42), est mis à la forme d'une portée (40) en au moins un point par un refoulement de matière,
**caractérisé en ce qu'**
on forme tout d'abord une vis sans fin (26) sur l'arbre (22) et on forme ensuite par refoulement de matière dans la région de la vis sans fin (26) au moins une portée (40) destinée à être emmanchée dans un palier d'arbre (42).

2. Procédé selon la revendication 1,
**caractérisé en ce que**
le refoulement de matière est exécuté par roulage à l'aide d'outils de laminoir lisseur (52).

3. Procédé selon la revendication 1 ou 2,
**caractérisé en ce que**
le formage de la vis sans fin (26) et le formage de la portée (40) s'effectuent par refoulement de matière sur la même machine.

4. Procédé selon une des revendications 1 à 3,
**caractérisé en ce que**
le formage de la portée (40) est exécuté par roulage de l'arbre (22).

5. Procédé selon une des revendications 1 à 4,
**caractérisé en ce que**
lors du refoulement de la matière, les dents (56) de la vis sans fin sont au moins partiellement déformées à froid et la matière des dents est refoulée dans les creux de denture (58).

6. Procédé selon la revendication 1 à 5,
**caractérisé en ce que**
le formage de la portée (40) s'effectue à l'extrémité (38) de l'arbre (22).

7. Procédé selon une des revendications 1 à 6,
**caractérisé en ce que**
la largeur (54) de la portée (40) correspond au moins à un pas de filetage (60) de la vis sans fin (26).

8. Dispositif pour manoeuvrer des éléments appartenant à un véhicule au moyen d'un moteur d'entraînement électrique (12) présentant un arbre d'induit (22) et d'un réducteur (14) monté en aval de ce moteur, en particulier d'un réducteur à vis sans fin (14), qui est relié fonctionnellement au moteur d'entraînement (12) par l'intermédiaire de l'arbre d'induit (22), l'arbre d'induit (22) étant fabriqué selon une des revendications de procédé précédentes,
**caractérisé en ce qu'**
en au moins un point sur l'arbre d'induit (22), on forme par refoulement de matière en déformation à froid, dans la région d'une vis sans fin (26) préalablement formée, une portée (40) destinée à être emmanchée dans un palier d'arbre (42).

9. Dispositif selon la revendication 8,
**caractérisé en ce que**
la portée (40) se trouve directement à l'extrémité (38) de l'arbre (22).

10. Dispositif selon une des revendications 9 ou 10,
**caractérisé en ce que**
la portée (40) forme un tourillon de portée (62) guidé dans une douille réceptrice de palier (64).
